(19) Europäisches Patentamt
European Patent Office
Office européen des brevets

(11) Veröffentlichungsnummer: **0 047 374**
**A1**

(12) # EUROPÄISCHE PATENTANMELDUNG

(21) Anmeldenummer: **81105440.2**

(22) Anmeldetag: **11.07.81**

(51) Int. Cl.³: **C 08 J 3/12**, C 08 L 23/02 // B29H21/04

(30) Priorität: **21.08.80 DE 3031508**
**21.08.80 DE 3031556**
**21.08.80 DE 3031487**

(43) Veröffentlichungstag der Anmeldung: **17.03.82**
**Patentblatt 82/11**

(84) Benannte Vertragsstaaten: **BE DE FR GB IT NL**

(71) Anmelder: **CHEMISCHE WERKE HÜLS AG,**
**Postfach 1320, D-4370 Marl 1 (DE)**

(72) Erfinder: **Blümel, Harald, Dr., Spreewaldstrasse 3,**
**D-4370 Marl (DE)**
Erfinder: **Haag, Horst Günther, Dr., Wellerfeldweg 219,**
**D-4370 Marl (DE)**

(54) **Verfahren zur Herstellung von lagerstabilen, Trennmittel enthaltenden Ethylen-alpha-Olefin-(Dien)-Kautschuk-Pulvern.**

(57) Der Anmeldungsgegenstand betrifft ein Verfahren zur Herstellung von lagerstabilen, Trennmittel enthaltenden Ethylen-$\alpha$-Olefin-(Dien)-Kautschuk-Pulvern durch Mahlen der Kautschukkrümmel oder der vorzerkleinerten Kautschukpartikel und Zugabe eines geeigneten Trennmittels vor, während oder nach dem Mahlen des Kautschuks.

Der eingesetzte Kautschuk hat eine Rohfestigkeit von 5 bis 20 MPa und eine Mooney-Viskosität ML (1 + 4) 100 °C von 50 bis 150.

Das Verfahren wird weiterhin charakterisiert durch die Art der Trennmittel, die u.a. spezielle Polyolefine, Kieselsäuren und Ruße umfassen.

EP 0 047 374 A1

Verfahren zur Herstellung von lagerstabilen, Trennmittel enthaltenden Ethylen-$\alpha$-Olefin-(Dien)-Kautschuk-Pulvern

Es ist bekannt, Kunststoffe und Kautschuke zu Pulvern unterschiedlicher Feinheitsgrade zu mahlen, wobei der erzielbare Zerkleinerungsgrad von der Art der angewendeten Mahlvorrichtung, den Mahlbedingungen und von bestimmten Eigenschaften der eingesetzten Polymeren abhängig ist.

Weiterhin ist bekannt, daß durch Mahlen hergestellte Kautschukpulver - vor allem unter Temperaturbedingungen, wie sie z. B. beim Transport oder bei der Lagerung vorkommen können - dazu neigen, wieder zu mehr oder minder großen zusammenhängenden Aggregaten oder Klumpen zusammenzubacken. Dies ist sowohl ein Hindernis für die Silierung, als auch für die von pulverförmigen Kunststoffen her bekannte Trocken-Pulver-Mischtechnik und für den Einsatz in der Verarbeitungsrichtung, die als Pulverkautschuk-Technologie bezeichnet wird.

Um das unerwünschte Zusammenbacken zu verhindern, müssen gemäß den Ausführungen in der DE-OS 26 48 301 bei den bekannten Mahlverfahren dem Kautschukgranulat Füllstoffe in Form von Pudermitteln in so großer Menge zugesetzt werden, daß der gepuderte pulverförmige Kautschuk bei seiner Weiterverarbeitung nicht mehr die Eigenschaften, insbesondere nicht mehr die mechanischen Eigenschaften des ungepuderten Kautschuks besitzt. Aus diesem Grunde wird in der genannten DE-OS 26 48 301 ein Verfahren zur Herstellung füllstoffarmer Kautschukpulver nach dem Mahlverfahren beschrieben und beansprucht, das es gestattet, mit einem Pudermittelgehalt von weniger als 7 Gewichtsprozent auszukommen.

Das mehrstufige Verfahren ist dadurch gekennzeichnet, daß der Kautschuk zunächst durch mechanische Vorzerkleinerung in oberflächen- und porenreiche Partikel übergeführt wird, die Gesamtmenge an Pudermittel in den pneumatisch geförderten Kautschukpartikelstrom eingedüst wird, so daß das Pudermittel nahezu vollständig von den Kautschukpartikeln adsorbiert wird und umgebendes Pudermittel weitgehend gleichmäßig zwischen den gepuderten Kautschukpartikeln verteilt dem Mahlvorgang zugeführt wird, das Mahlen der Kautschukpartikel bei niedriger Temperatur durchgeführt wird, so daß ein Fließen des Kautschuks verhindert wird und die durch das Mahlen gebildete oberflächen- und einbuchtungsreiche Struktur der Kautschukpulverteilchen erhalten bleibt, in einer an den Mahlvorgang anschließenden pneumatischen Förderstrecke noch ungebundenes oder frisch zudosiertes Pudermittel vom Kautschukpulver adsorbiert wird und das erhaltene gepuderte Kautschukpulver so weit gekühlt wird, daß kein warmer Fluß des Kautschuks auftritt.

Aufgabe der vorliegenden Erfindung war es nun, ein Verfahren zu entwickeln, mit dem es in einfacher und wirtschaftlicher Weise möglich ist, lagerstabile Ethylen-$\alpha$-Olefin-(Dien)-Kautschuk-Pulver durch Mahlen entsprechender Krümel oder vorzerkleinerter Partikel und durch Zugabe möglichst geringer Mengen eines Trennmittels herzustellen.

Diese Aufgabe wird überraschenderweise durch die in den Patentansprüchen beschriebenen Maßnahmen gelöst.

Als Ethylen-$\alpha$-Olefin-(Dien)-Kautschuke gemäß Merkmal 1 werden bei dem erfindungsgemäßen Verfahren einmal die gesättigten Ethylen-$\alpha$-Olefin-Kautschuke (EPM), und zum anderen die ungesättigten Ethylen-$\alpha$-Olefin-Dien-Kautschuke (EPDM) eingesetzt.

Von ihnen ist bekannt, daß sie aus Ethylen, einem oder mehreren α-Olefinen mit 3 bis 8 C-Atomen, vornehmlich Propylen und/oder Buten-(1), und gegebenenfalls einem oder mehreren nicht-konjugierten Dienen mit Hilfe sogenannter Ziegler-Natta-Katalysatoren, die zusätzlich noch Aktivatoren und Modifikatoren enthalten können, in Lösung oder Dispersion bei Temperaturen von -30 bis +100 °C, z. B. nach dem Verfahren der DE-ASS 15 70 352, 15 95 442 und 17 20 450 sowie der DE-OS 24 27 343 hergestellt werden können.

Bevorzugte Ethylen-α-Olefin-(Dien)-Kautschuke sind solche, die aus 45 bis 80 Gewichtsprozent, vorzugsweise 50 bis 75 Gewichtsprozent, Ethylen und aus 55 bis 20 Gewichtsprozent, vorzugsweise 50 bis 25 Gewichtsprozent, eines α-Olefins, vorzugsweise Propylen und/oder Buten-(1), bestehen und gegebenenfalls ein nicht-konjugiertes Dien in einer solchen Menge enthalten, daß die Kautschuke 0,5 bis 30 Doppelbindungen /1000 C-Atome aufweisen. Besonders geeignete Diene sind cis- und trans-Hexadien-(1,4), Dicyclopentadien, 5-Methylen-, 5-Ethyliden- und 5-Isopropyliden-2-norbornen.

Wichtig und verfahrenskritisch für das erfindungsgemäße Verfahren ist, daß die gesättigten und ungesättigten Polyolefinkautschuke eine Polymerrohfestigkeit von 5 bis 20 MPa, vorzugsweise von 8 bis 17 MPa (gemessen bei 25 °C nach DIN 53 504 mit dem S1-Normstab und 250 mm Vorschub) aufweisen. Dieses Kriterium wird von den sogenannten Sequenzpolymeren erfüllt. Darunter versteht man Ethylen-α-Olefin-Co- bzw. Ethylen-α-Olefin-Dien-Terpolymere, die Ethylen oder eines der α-Olefine neben einer statistischen Verteilung der Monomeren in der Polymerkette in Form von unterschiedlich langen Kettenabschnitten (Sequenzen) enthalten.

Neben der geforderten Polymerrohfestigkeit ist es wichtig, daß die einsetzbaren Polymeren eine Viskosität von 50 bis 150, vorzugsweise von 70 bis 120, ausgedrückt in Mooneyeinheiten ML (1+4) bei 100 °C (gemessen nach DIN 53 523) aufweisen.

Die Gruppe der Trennmittel, die bei dem erfindungsgemäßen Verfahren eingesetzt werden, umfaßt drei Untergruppen.

In der Untergruppe gemäß Merkmal 2.1 sind zunächst die Polyethylene zu nennen. Geeignet sind die kristallinen und teilkristallinen Modifikationen mit Dichten von 0,910 bis 0,975 g/cm$^3$, Viskositätszahlen (gemessen nach DIN 53 728) von 50 bis 330 cm$^3$/g und Schmelzindices (gemessen nach DIN 53 735) von 0,2 bis 50 g/10 min. Unter Polyethylenen werden im Rahmen dieser Erfindung neben den Homopolymeren des Ethylens auch die Copolymeren aus Ethylen und anderen $\alpha$-Olefinen mit 3 bis 8 C-Atomen, vorzugsweise mit Propylen und/oder Buten-(1), innerhalb der genannten Spezifikationsgrenzen verstanden.

Neben den aufgeführten Polyethylentypen kommen aus der Reihe der Polyolefine kristalline und teilkristalline Homo- und Copolymere des Propylens mit Dichten von 0,900 bis 0,910 g/cm$^3$, Viskositätszahlen (gemessen nach DIN 53 728) von 100 bis 1 000 cm$^3$/g und Schmelzindices (gemessen nach DIN 53 735) von 0,1 bis 50 g/10 min sowie des Buten-(1) mit Dichten von 0,910 bis 0,975 g/cm$^3$, Viskositätszahlen (gemessen nach DIN 53 728) von 100 bis 1 000 cm$^3$/g und Schmelzindices (gemessen nach DIN 53 735) von 0,1 bis 100 g/10 min als Trennmittel infrage. Bei den Copolymeren des Propylens und Buten-(1) handelt es sich um solche, die aus Propylen oder Buten-(1) mit einem anderen $\alpha$-Olefin mit bis zu 8 C-Atomen, vorzugsweise mit bis zu 4 C-Atomen, hergestellt werden.

Monomere, die bevorzugt mit Propylen oder Buten-(1) copolymerisiert werden, sind demnach Ethylen, bezüglich des Propylens Buten-(1) und bezüglich des Buten-(1) Propylen. Ihren Mengen in den Copolymeren sind durch die kritischen Bereiche der Kenngrößen (Dichte, Viskositätszahl, Schmelzindex) Grenzen gesetzt.

Schließlich können bei dem erfindungsgemäßen Verfahren alle Emulsions- und Suspensions-Polyvinylchloridtypen mit einer Viskositätszahl (gemessen nach DIN 53 726) von 50 bis 200, vorzugsweise 70 bis 170, als Trennmittel verwendet werden.

Alle Polymere gemäß Merkmal 2.1, die bei dem erfindungsgemäßen Verfahren als Trennmittel eingesetzt werden können, sind Produkte des Standes der Technik und werden nach bekannten Verfahren hergestellt (z. B. Polyethylen nach DE-PS 11 17 875, Polypropylen nach DE-PS 23 38 478, Polybuten-(1) nach DE-PS 23 18 905 und Polyvinylchlorid wie bei H. Kainer, "Polyvinylchlorid und Vinylchlorid-Mischpolymerisate", Springer-Verlag, Berlin / Heidelberg / New York (1965), beschrieben).

Wichtig für ihren Einsatz ist, daß mindestens 80 Gewichtsprozent der Sekundärteilchen einen Durchmesser von $< 100\ \mu m$ haben und der mittlere Sekundärteilchendurchmesser in dem Bereich von 5 bis 50 $\mu m$, vorzugszeige 7 bis 36 $\mu m$, liegt.

Unter Sekundärteilchen werden bekanntermaßen die sich aufgrund der Agglomerationstendenz der feinteiligen, sogenannten Primärteilchen bildenden Agglomerate verstanden.

In einer weiteren Untergruppe der Trennmittel gemäß den Merkmalen 2.2.1 bis 2.2.3 sind zunächst die synthetisch hergestellten, amorphen Kieselsäuren ($SiO_2$) zu nennen, wie sie z. B. entweder durch Flammen-Hydrolyse von Siliciumhalogeniden ($SiO_2$-Gehalt $> 99{,}8$ %) oder durch Fällung von Alkalisilikaten mit Säuren auf nassem Wege erhalten werden. Die nach dem Fällverfahren erhaltenen Kieselsäuren können sowohl verhältnismäßig rein sein ($SiO_2$-Gehalt > 99,8 %), als auch einen gewissen Anteil an Calciumsilikat ($SiO_2$-Gehalt > 85 %) enthalten. Ferner fallen im Rahmen dieser Erfindung auch Natriumaluminiumsilikate darunter. Die Analyse eines typischen Produktes ergibt z. B. 75 % $SiO_2$, 8 % $Al_2O_3$, 7 % $Na_2O$, 5 % Glühverlust und 5 % Trockenverlust (Gewichtsprozente).

Neben den angeführten, synthetisch hergestellten amorphen, Kieselsäuren können bei dem vorliegenden Verfahren natürlich vorkommende Kieselsäuren sowie kieselsäurehaltige Mineralien eingesetzt werden.
Als natürliche Kieselsäuren sind sogenannte Kieselerden geeignet, das sind aufbereitete Fraktionen von chalcedonartigem Kieselsäureanhydrid ($SiO_2$) und Kaolinit ($Al_4(OH)_8Si_4O_{10}$). Der Kaolinit-Anteil kann hierbei zwischen 15 und 95 Gewichtsprozent liegen. Eine typische chemische Analyse einer Kieselerde weist folgende Bestandteile auf: 82 % $SiO_2$, 12 % $Al_2O_3$, 0,6 % $Fe_2O_3$, 0,2 % $TiO_2$, 0,5 % CaO/MgO, 0,6 % $Na_2O/K_2O$ und 4,1 % Glühverlust.
Von den kieselsäurehaltigen Mineralien kommen in Betracht: Aluminiumsilikate, wie Kaoline oder Kaolin/$SiO_2$-Gemische mit einem Kaolinitanteil von mehr als 45 % oder Schiefermehl, sowie Magnesiumsilikate, wie Talk ($Mg_3(Si_4O_{10})(OH)_2$).

Alle Trennmittel gemäß den Merkmalen 2.2.1 bis 2.2.3 sind Produkte, die entweder nach bekannten Verfahren des Standes der Technik hergestellt werden können oder in der Natur vorkommen [nähere Einzelheiten siehe z. B. Gmelins Handbuch der anorganischen Chemie, 8. Auflage "Silicium", Kirk-Othmer, Encyclopedia of Chemical Technology, Vol. 18 (1969) und Ullmanns Encyklopädie der technischen Chemie, 15. Band (1964)].
Sie werden in der Kautschukindustrie üblicherweise als Füllstoffe verwendet.

Die synthetisch hergestellten, amorphen Kieselsäuren haben eine mittlere Primärteilchengröße von 0,01 bis 0,2 µm, vorzugsweise bis 0,15 µm, und eine mittlere Sekundärteilchengröße von 5 bis 35 µm, vorzugsweise 7 bis 25 µm, mindestens 65 Gewichtsprozent der natürlich vorkommenden Kieselsäuren eine mittlere Primärteilchengröße von $<5$ µm, vorzugsweise 0,7 bis 3,5 µm, und eine mittlere Sekundärteilchengröße von 7 bis 50 µm, vorzugsweise 10 bis 40 µm, und die kieselsäurehaltigen Mineralien eine mittlere Primärteilchengröße von 0,5 bis 2,5 µm, vorzugsweise 0,8 bis 2,0 µm, und eine mittlere Sekundärteilchengröße von 10 bis 35 µm, vorzugsweise 15 bis 30 µm.

Als weitere Trennmittel sind schließlich Ruße gemäß Merkmal 2.3 zu nennen. Hierzu eignen sich alle Ruße, die in der Kautschukindustrie üblicherweise als Füllstoffe verwendet werden, und die eine mittlere Primärteilchengröße $<0,3$ µm, vorzugsweise 0,01 bis 0,25 µm, und besonders bevorzugt 0,02 bis 0,2 µm, aufweisen. Solche Ruße können z. B. nach dem Furnace-, Lichtbogen- oder Channel-Verfahren erhalten werden [nähere Einzelheiten siehe z. B. Ullmanns Encyklopädie der technischen Chemie, 3. Auflage, 14. Band (1963), Seite 793 ff., S. Boström, Kautschuk-Handbuch, 2. Band (1960), Seite 259 ff., ASTM, Designation: D 1765 - 68 und Kautschuk-Lexikon von K. F. Heinisch, A. W. Gentner-Verlag, Stuttgart (1977), Seite 434 ff.].

Sofern die Trennmittel nicht mit einer mittleren Teilchengröße innerhalb der genannten Spezifikationsgrenzen anfallen bzw. greifbar sind, können z. B. durch Mahlen von Partikeln mit größerer Teilchengröße gewonnen werden, oder von Anteilen mit unerwünschtem Teilchendurchmesser durch z. B. Sieben befreit werden.

Die zur Charakterisierung der Trennmittel angegebenen mittleren Größen (mittleren Durchmesser) der Primär- bzw. Sekundärteilchen werden durch übliche Methoden ermittelt.

Die Primärteilchendurchmesser werden nach der elektronenmikroskopischen Methode ermittelt [siehe W. A. Ladd "The electron microscope and its application to rubber testing and research", Vanderbilt Rubber Handbook, New York (1958), Seite 334 ff.].

Eine Möglichkeit zur Messung der Sekundärteilchengrößen bietet die sogenannte "Microtrac"-Methode, bei der die Streuung von Laser-Licht durch einen von der Firma Leeds & Northrup / North Wales, Pennsylvania / USA hergestellten Korngrößenanalysator benutzt wird (siehe Weiß, E. L. und H. N. Frock: Rapid Analysis of Particle Size Distributions by Laser Light-Scattering, Powder Technology 14 (1976), Seiten 287 bis 293).

Der Analysator arbeitet nach dem Prinzip der korngrößenabhängigen Lichbeugung und erstellt die Kornverteilung über die radiale Intensitätsverteilung des gebeugten Laserstrahls. Die Messungen werden in wäßriger Suspension, bei Meßzeiten von 50 Sekunden und einer Schichtdicke der durchstrahlten Schicht von 1,8 mm durchgeführt.

Die Trennmittel werden den Ethylen-α-Olefin-(Dien)-Kautschuken vor, während oder nach dem Mahlprozeß in Mengen von 0,5 bis 10, vorzugsweise von 3 bis 7 Gewichtsteilen, bezogen auf 100 Gewichtsteile Ethylen-α-Olefin-(Dien)-Kautschuk, zugesetzt. Die optimale Menge läßt sich leicht durch einige orientierende Versuche ermitteln. Dabei ist es nicht gesagt, daß das gesamte zugesetzte Trennmittel vom Kautschukpulver adsorbiert wird. Ein Teil davon kann durchaus in freier, also nicht adsorbierter Form vorliegen und gegebenenfalls zu einem späteren Zeitpunkt, z. B. vor dem Einsatz des Kautschukpulvers, von diesem, z. B. durch Sieben, entfernt werden.

Bei dem erfindungsgemäßen Verfahren geht man im allgemeinen so vor, daß man den Ethylen-α-Olefin-(Dien)-Kautschuk in Form von Krümeln oder vorzerkleinerter Partikel mit einem mittleren Teilchendurchmesser von bis zu einigen cm, vorzugsweise weniger als 5 cm, in einer handelsüblichen Mühle, z. B. einer wassergekühlten Pralltellermühle der Firma Pallmann Maschinenfabrik GmbH & Co. KG, 6600 Zweibrücken, bis zu der gewünschten Teilchengröße von bis ca. 1 mm mittlerem Teilchendurchmesser mahlt und vor, während oder nach dem Mahlprozeß eines oder mehrere der angeführten Trennmittel zusetzt. Der Zusatz des Trennmittels vor oder während des Mahlprozesses ist dabei bevorzugt.

Beim Mahlprozeß selbst sollte darauf geachtet werden, daß die Temperatur des Mahlgutes ≥ 15 min nach dem Mahlprozeß nicht größer als 40 °C ist. Dies läßt sich in einfacher Weise über die Kühlung der Mühle während des Mahlvorgangs erreichen.

Es kann angebracht sein, die Trennmittel enthaltenden pulverförmigen Ethylen-α-Olefin-(Dien)-Kautschuke sich vor ihrer Lagerung oder Weiterverarbeitung bis z. B. auf Raumtemperatur (25 °C) abkühlen zu lassen.

Die nach dem erfindungsgemäßen Verfahren hergestellten,

Trennmittel enthaltenden, lagerstabilen Ethylen-α-Olefin-(Dien)-Kautschuk-Pulver werden in erster Linie zur Herstellung von Formkörpern nach den Verfahrensschritten der Pulverkautschuk-Technologie verwendet. Daneben sind sie auch für solche Anwendungen von Vorteil, bei denen eine Einarbeitung von Ethylen-Propylen-(Dien)-Kautschuk in flüssige Medien, wie z. B. Bitumen, erforderlich ist. Wie bereits erwähnt, machen es spezielle Einsatzzwecke gegebenenfalls erforderlich, das nicht adsorbierte Trennmittel vorher abzutrennen.

Das erfindungsgemäße Verfahren wird anhand der nachfolgenden Beispiele näher erläutert. Die nicht erfindungsgemäßen Vergleichsbeispiele werden mit Buchstaben und die übrigen Beispiele mit Ziffern bezeichnet. Dabei werden die Rieselfähigkeit und gegebenenfalls die Agglomeratbildung der Produkte - gemessen nach 24 Stunden nach einer Belastung von 1 850 Pa bei 45 °C - wie folgt benotet:

| Benotung | Beschreibung |
|---|---|
| 1 | Keine Agglomeratbildung, frei fließendes Pulver. |
| 2 | Im rieselfähigen Pulver liegende, sehr lose zusammenhängender Agglomerate, die bei auch nur geringer einmaliger mechanischer Beanspruchung wieder zu Pulver zerfallen. |
| 3 | Lose zusammenhängende Agglomerat-Körper, teilweise in Form des Lagergefäßes, der bei leichter Torsions- oder Druckbeanspruchung - z. B. beim Fall aus geringer Höhe - wieder zu Pulver und gegebenenfalls kleineren Agglomeraten zerfällt. |

| Benotung | Beschreibung |
|---|---|
| 4 | Agglomerat-Körper in Form des Lagergefäßes, der nur durch wiederholte Torsions- bzw. Schwerbeanspruchung in kleinere Agglomerate und gegebenenfalls in Pulver zerteilt werden kann. |
| 5 | Bildung eines fest zusammengebackenen Agglomerat-Körpers in Form des Lagergefäßes, der sich nur schwer zerteilen läßt. |

Beispiele 1 bis 6 mit Trennmitteln der Untergruppe gemäß Merkmal 2.1

Beispiel 1

Ein in Form unregelmäßiger Krümel (Teilchendurchmesser $\leq$ 30 mm) vorliegender Ethylen-Propylen-Kautschuk mit einem Propylen-Gehalt von 28 Gewichtsprozent, einer Polymerrohfestigkeit von 13 MPa und einer Mooney-Viskosität von ML (1+4) 100 °C von 85 wird in einer wassergekühlten Pralltellermühle der Firma Pallmann Maschinenfabrik GmbH & Co. KG, 6600 Zweibrücken, auf eine durchschnittliche Teilchengröße von 0,5 mm gemahlen. Die Temperatur des Mahlgutes ca. 10 min nach Beendigung des Mahlvorganges beträgt 38 °C.

in einem wassergekühlten, 10 l fassenden Trogmischer, Bauart Henschel, werden zu 2 000 g des so hergestellten EPM-Pulvers bei 2 000 Upm und über einen Zeitraum von 2 Minuten 5 Gewichtsprozent eines Polyethylenpulvers mit einer mittleren Sekundärteilchengröße von 25 µm, hergestellt nach einem Niederdruckpolymerisationsverfahren, mit einer Dichte bei Raumtemperatur von 0,962 g/cm$^3$ und einem Schmelzindex nach DIN 53 735 MFI 190/5 von 20 g/10 min zugegeben.

Von dem mit diesem Trennmittel versehenen EPM-Pulver werden zwecks Benotung der Rieselfähigkeit bzw. der Agglomeratbildung 250 g in ein 800 $cm^3$ fassendes Becherglas gegeben und in einem Wärmeschrank 24 Stunden bei 45 °C gelagert, wobei durch eine Metallscheibe eine Belastung von 1 850 Pa aufgebracht wird. Die Note beträgt 2 bis 3. Daraus geht hervor, daß auch nach Lagerung bei erhöhter Temperatur ein pulverförmiges Produkt erhalten wird, dessen Agglomeratbildungstendenz bei geringen mechanischen Beanspruchungen wieder aufgehoben wird.

Beispiel 2

Kautschuk, Trennmittel und Mahlvorgang dieses Beispiels entsprechen dem Beispiel 1, wobei jedoch die Zugabe des wiederum in einer Menge von 5 Gewichtsprozent eingesetzten Polyethylen-Pulvers zu dem in Krümelform vorliegenden EPM über einen Trommelmischer vor dem Mahlprozeß erfolgt. Während des Mahlvorganges wird durch Sichtvorrichtungen aufgefangenes Trennmittel der Mahlvorrichtung wieder zugeführt. Das Produkt wird mit 2 benotet.

Beispiel 3

Ein in Ballenform vorliegender Ethylen-Propylen-Dien-Kautschuk, der neben Ethylen 28 Gewichtsprozent Propylen und 5 Gewichtsprozent 5-Ethyliden-2-norbornen enthält, und der eine Polymerrohfestigkeit von 13 MPa und eine Mooney-Viskosität von ML (1+4) 100 °C von 85 aufweist, wird zunächst zu Chips mit einem mittleren Durchmesser von ca. 1 cm vorzerkleinert. Den Chips werden sodann über einen Trommelmischer vor dem Mahlprozeß, der anschließend wie im Beispiel 1 beschrieben erfolgt, 5 Gewichtsprozent des auch in den Beispielen 1 und 2 eingesetzten Polyethylens zugesetzt. Mahlguttemperatur ca. 8 min nach Beendigung des Mahlvorganges: 37 °C. Nach Lagerung bei erhöhter Temperatur wird die Rieselfähigkeit bzw. die Agglomeratbildung des Produktes mit einer mittleren Korngröße von 0,5 mm mit 2 bis 3 benotet.

Beispiel 4 (analog Beispiel 1)

Mit dem EPM-Kautschuk und der Arbeitsweise gemäß Beispiel 1 wird ein Trennmittel enthaltendes EPM-Pulver hergestellt, wofür 5 Gewichtsprozent eines durch ein Niederdruckpolymerisationsverfahren hergestellten Polypropylen-Pulvers mit einem mittleren Sekundärteilchendurchmesser von 30 µm eingesetzt werden. Das Polypropylen hat bei Raumtemperatur eine Dichte von 0,907 g/cm$^3$ und einen Schmelzindex nach DIN 53 735 MFI 190/5 von 20 g/10 min. Das Produkt wird mit 3 benotet.

Beispiel 5 (analog Beispiel 1)

Mit dem EPM-Kautschuk und der Arbeitsweise gemäß Beispiel 1 wird ein Trennmittel enthaltendes EPM-Pulver hergestellt, wofür 5 Gewichtsprozent eines nach einem Emulsionsverfahren hergestellten Polyvinylchlorid-Pulvers mit einer mittleren Sekundärteilchengröße von 9 µm eingesetzt werden. Das Produkt wird mit 2 benotet.

Beispiel 6 (analog Beispiel 2)

Beispiel 5 wird mit dem Unterschied wiederholt, daß die Arbeitsweise des Beispiels 2 verwendet wird. Das Produkt wird mit 1 bis 2 benotet.

Beispiele 7 bis 13 mit Trennmitteln der Untergruppe gemäß den Merkmalen 2.2.1 bis 2.2.3

Beispiel 7 (analog Beispiel 1)

Mit dem EPM-Kautschuk und der Arbeitsweise gemäß Beispiel 1 wird ein Trennmittel enthaltendes EMP-Pulver hergestellt, wofür 5 Gewichtsprozent einer pyrogenhergestellten, amorphen Kieselsäure mit einem mittleren Primärteilchendurchmesser von 0,012 µm und einem Sekundärteilchendurchmesser von 10 µm eingesetzt werden. Das Produkt wird mit 1 benotet.

Beispiel 8 (analog Beispiel 2)

Kautschuk, Trennmittel und Mahlvorgang dieses Beispiels entsprechen dem Beispiel 7, wobei jedoch die Zugabe der wiederum in einer Menge von 5 Gewichtsprozent eingesetzten Kieselsäure zu dem in Krümelform vorliegenden EPM über einen Trommelmischer vor dem Mahlprozeß erfolgt. Während des Mahlvorganges wird durch Sichtvorrichtungen aufgefangenes Trennmittel der Mahlvorrichtung wieder zugeführt. Das Produkt wird mit 1 benotet.

Beispiel 9 (analog Beispiel 3)

Mit dem EPDM-Kautschuk und der Arbeitsweise gemäß Beispiel 3 wird ein Trennmittel enthaltendes EPDM-Pulver hergestellt, wofür 5 Gewichtsprozent des auch in den Beispielen 7 und 8 eingesetzten Trennmittels zugesetzt werden. Das Produkt wird mit 2 benotet.

Beispiel 10 (analog Beispiel 1)

Mit dem EPM-Kautschuk und der Arbeitsweise gemäß Beispiel 1 wird ein Trennmittel enthaltendes EPM-Pulver hergestellt, wofür 5 Gewichtsprozent einer naßgefällten amorphen Kieselsäure mit einem mittleren Primärteilchendurchmesser von 0,085 µm und einem mittleren Sekundärteilchendurchmesser von 11 µm eingesetzt werden. Das Produkt wird mit 2 bis 3 benotet.

Beispiel 11 (analog Beispiel 2)

Beispiel 10 wird mit dem Unterschied wiederholt, daß die Arbeitsweise des Beispiels 2 verwendet wird. Das Produkt wird mit 1 bis 2 benotet.

<u>Beispiel 12</u> (analog Beispiel 1)

Mit dem EPM-Kautschuk und der Arbeitsweise gemäß Beispiel 1 wird ein Trennmittel enthaltendes EPM-Pulver hergestellt, wofür 5 Gewichtsprozent eines natürlich vorkommenden, durch Sichtung aufbereiteten Gemisches aus 45 Gewichtsprozent chalcedonhaltigem Kiesesäureanhydrid und 60 Gewichtsprozent Kaolinit mit einer Primärteilchengröße von 0,8 µm und einer Sekundärteilchengröße von < 20 µm eingesetzt werden. Das Produkt wird mit 2 benotet.

<u>Beispiel 13</u> (analog Beispiel 1)

Mit dem EPM-Kautschuk und der Arbeitsweise gemäß Beispiel 1 wird ein Trennmittel enthaltendes EPM-Pulver hergestellt, wofür 5 Gewichtsprozent eines aus natürlichen Vorkommen stammenden und durch Sichtung aufbereiteten Schiefermehls (Hauptbestandteil Kaolinit) mit einer mittleren Primärteilchengröße von 1,8 µm und einer mittleren Sekundärteilchengröße von 28 µm eingesetzt werden. Das Produkt wird mit 3 benotet.

Beispielse 14 bis 18 mit Trennmitteln der Untergruppe gemäß <u>Merkmal 2.3</u>

<u>Beispiel 14</u> (analog Beispiel 1)

Mit dem EPM-Kautschuk und der Arbeitsweise gemäß Beispiel 1 wird ein Trennmittel enthaltendes EPM-Pulver hergestellt, wofür 5 Gewichtsprozent eines nach dem Lichtbogenverfahren hergestellten Rußes mit einer mittleren Primärteilchengröße von 0,02 µm eingesetzt werden. Das Produkt wird mit 2 benotet.

Beispiel 15 (analog Beispiel 2)

Kautschuk, Ruß und Mahlvorgang dieses Beispiels entsprechen dem Beispiel 14, wobei jedoch die Zugabe des wiederum in einer Menge von 5 Gewichtsprozent eingesetzten Lichtbogen-Rußes zu dem in Krümelform vorliegenden EPM über einen Trommelmischer vor dem Mahlprozeß erfolgt. Während des Mahlvorganges wird durch Sichtvorrichtungen aufgefangenes Trennmittel des Mahlvorrichtung wieder zugeführt. Das Produkt wird mit 1 benotet.

Beispiel 16 (analog Beispiel 3)

Mit dem EPDM-Kautschuk und der Arbeitsweise gemäß Beispiel 3 wird ein Trennmittel enthaltendes EPDM-Pulver hergestellt, wofür 5 Gewichtsprozent des auch in den Beispielen 14 und 15 eingesetzten Lichtbogen-Rußes zugesetzt werden. Das Produkt wird mit 2 bis 3 benotet.

Beispiel 17 (analog Beispiel 1)

Mit dem EPM-Kautschuk und der Arbeitsweise gemäß Beispiel 1 wird ein Trennmittel enthaltendes EPM-Pulver hergestellt, wofür 5 Gewichtsprozent eines nach dem Furnace-Verfahren hergestellten Rußes mit einer mittleren Primärteilchengröße von 0,025 µm eingesetzt werden. Das Produkt wird mit 1 bis 2 benotet.

Beispiel 18 (analog Beispiel 1)

Beispiel 17 wird mit einem nach dem Furnace-Verfahren hergestellten Ruß mit einer mittleren Primärteilchengröße von 0,2 µm wiederholt. Das Produkt wird mit 3 benotet.

Vergleichsbeispiele A und B

Die in den Beispielen 1 und 3 beschriebenen Verfahrensweisen werden ohne Zusatz eines erfindungsgemäßen Trennmittels wiederholt und ergeben Produkte mit der Benotung der Rieselfähigkeit bzw. der Agglomeratbildung von 4 - 5 und 5, d. h. die Produkte backen nach Temperaturlagerung zu Agglomerat-Körpern in Form des Lagergefäßes zusammen, die sich praktisch nicht mehr zerteilen lassen. BP

Patentanspruch:

Verfahren zur Herstellung von lagerstabilen, Trennmittel enthaltenden Ethylen-α-Olefin-(Dien)-Kautschuk-Pulvern durch Mahlen der Kautschukkrümel oder der vorzerkleinerten Kautschukpartikel und Zugabe eines Trennmittels, gekennzeichnet durch folgende Merkmale:

1 Einsatz eines Ethylen-α-Olefin-(Dien)-Kautschuks mit einer Rohfestigkeit von 5 bis 20 MPa und einer Mooney-Viskosität ML (1+4) 100 °C von 50 bis 150;

2 Einsatz eines Trennmittels aus der Gruppe bestehend aus:

2.1 Polyethylen, Polypropylen, Polybuten-(1) und Polyvinylchlorid mit einer mittleren Sekundärteilchengröße von 5 bis 50 µm;

2.2.1 einer synthetisch hergestellten, amorphen Kieselsäure ($SiO_2$) mit einer mittleren Primärteilchengröße von 0,01 bis 0,2 µm und einer mittleren Sekundärteilchengröße von 5 bis 35 µm,

2.2.2 einer natürlich vorkommenden Kieselsäure, von der mindestens 65 Gewichtsprozent einen mittleren Primärteilchendurchmesser von $<5$ µm und eine mittlere Sekundärteilchengröße von 7 bis 50 µm haben, und

2.2.3 eines kieselsäurehaltigen Minerals mit einer mittleren Primärteilchengröße von 0,5 bis 2,5 µm und einer mittleren Sekundärteilchengröße von 10 bis 35 µm, und

2.3 Ruß mit einer mittleren Primärteilchengröße von $<0,3$ µm; und

3 Zumischen von 0,5 bis 10 Gew.T. des Trennmittels vor, während oder nach dem Mahlen von 100 Gew.T. des Kautschuks. PSP

0047374

Europäisches Patentamt

# EUROPÄISCHER RECHERCHENBERICHT

Nummer der Anmeldung

EP 81 10 5440

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| D | DE - A - 2 648 301 (BAYER)<br>* Ansprüche; Seite 7, Zeile 22 - Seite 8, Zeile 9; Beispiele 10,11 *<br>-- | 1 |
| | NL - A - 78 10812 (STAMICARBON)<br>* Ansprüche 1,2,4,5-7; Seite 5, Zeilen 24-32 *<br>-- | 1 |
| | US - A - 3 361 850 (C.A. YOUNG)<br>* Ansprüche; Spalte 2, Zeilen 3-71 *<br>-- | 1 |
| | FR - A - 1 534 717 (PECHINEY-SAINT-GOBAIN)<br>* Zusammenfassung; Seite 2, Zeilen 24-47 *<br>-- | 1 |
| A | US - A - 4 183 887 (R.F. KARG) (15-01-1980) | 1 |
| A | US - A - 3 669 722 (W.A. BISHOP) | 1 |
| A | FR - A - 2 093 589 (SUMITOMO) | 1 |
| A | DE - A - 2 128 680 (BASF WYANDOTTE) | 1 |
| A | US - A - 3 528 841 (C.R. DONALDSON et al.)<br>---- | 1 |

**KLASSIFIKATION DER ANMELDUNG (Int. Cl.³)**

C 08 J 3/12
C 08 L 23/02//
B 29 H 21/04

**RECHERCHIERTE SACHGEBIETE (Int. Cl.³)**

C 08 J 3/12
B 29 H 21/04
C 08 L 23/16

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Den Haag | 10-12-1981 | HALLEMEESCH |